# EUROPEAN PATENT APPLICATION

(11) **EP 1 700 736 A2**
(43) Date of publication of application: **13.09.2006**
(21) Application number: 06003665.4
(22) Date of filing: 23.02.2006
(51) Int. Cl.: B60N 2/23

(54) **Reclining device**

(30) Priority: 04.03.2005 JP 2005060779
(71) Applicant: Delta Tooling Co., Ltd., Hiroshima 736-0084 (JP)
(72) Inventor: Sakamoto, Yutaka c/o Delta Tooling Co.,Ltd., Hiroshima-shi, Hiroshima 736-0084 (JP)
(74) Representative: Eisenführ, Speiser & Partner

(57) **Abstract**

A reclining device (A) for appropriately adjusting an inclination of a seat back with respect to a seat cushion includes a worm (4) rotatably mounted on the seat cushion, a helical gear (6) mounted on the seat back and held in engagement with the worm (4), and a lock cam (14) for locking the worm (4) and the helical gear (6) or releasing the lock of the worm (4) and the helical gear (6). Both the worm (4) and the helical gear (6) have a lead angle greater than a friction angle. A lock plate (16) having a locking protrusion (16a) formed therewith is interposed between the worm (4) and the lock cam (14). The lock cam (14) is operable to press the lock plate (16) against the worm (4) to engage the locking protrusion (16a) with a portion of the worm (4), thereby locking the worm (4) and the helical gear (6).

## Description

### BACKGROUND OF THE INVENTION

### 1. Field of the Invention

The present invention relates to a reclining device attached to, for example, an automobile seat for appropriately adjusting inclination of a seat back with respect to a seat cushion.

### 2. Description of the Related Art

In a reclining device disclosed in Japanese Utility Model Publication (examined) No. 42-7950, a sector gear is fixed to a seat back while a worm, which can freely engage with and disengage from the sector gear, is rotatably attached to a seat cushion. The worm is connected to an operating shaft and, by pulling the operating shaft in the axial direction thereof and by subsequently lifting it up, the engagement between the worm and sector gear is released. When a load is applied to the seat back in this state, the seat back tilts and the inclination thereof can be altered quickly. When the hand is released from the operating shaft, the worm and the sector gear reengage with each other to hold the seat back in that position. In addition, if fine adjustment of the inclination of the seat back is required, when the operating shaft is rotated to rotate the worm, the sector gear held in engagement with the worm rotates gradually, making it possible to smoothly alter the seat back to a desired inclination.

In another reclining device disclosed in Japanese Laid-Open Patent Publication (unexamined) No. 10-217817, a sector gear and a worm having a lead angle greater than a friction angle are attached to a seat back and a seat cushion, respectively. According to this reclining device, by tilting the seat back, the worm is caused to rotate by way of the sector gear, making it possible to appropriately alter the inclination of the seat back.

In the conventional reclining device as disclosed in Japanese Laid-Open Patent Publication No. 10-217817, the inclination of the seat back can be quickly altered by rotating the worm by way of the sector gear, but the worm is locked by operating a lock cam to bring a brake member into contact with the worm. This construction is disadvantageous in that the number of component parts increases.

Further, a construction in which the lock cam is directly brought into engagement with a portion of the worm to lock the worm without providing any brake member has been proposed, but the lock cam is not smoothly operated in some cases. Accordingly, there is still room for improvement in terms of a feeling of operation.

### SUMMARY OF THE INVENTION

The present invention has been developed to overcome the above-described disadvantages.

It is accordingly an objective of the present invention to provide a reclining device capable of improving the feeling of operation and smoothly operating the lock cam by eliminating direct contact of the lock cam with the worm.

In accomplishing the above and other objectives, the reclining device according to the present invention includes a worm rotatably mounted on a seat cushion, a helical gear mounted on a seat back and held in engagement with the worm, and a lock cam for locking the worm and the helical gear or releasing the lock of the worm and the helical gear. Both the worm and the helical gear have a lead angle greater than a friction angle. A lock plate having a locking protrusion formed therewith is interposed between the worm and the lock cam. The lock cam is operable to press the lock plate against the worm to engage the locking protrusion with a portion of the worm, thereby locking the worm and the helical gear.

This construction eliminates direct contact of the lock cam with the worm and, hence, can improve the feeling of operation and allow smooth operation of the lock cam.

The worm has a large number of notches formed with a portion thereof, and the locking protrusion of the lock plate engages with one of the notches to lock the worm and the helical gear.

The lock plate is made of a plate spring, an elastic force of which acts to bias the locking protrusion in a direction in which the engagement of the locking protrusion with the worm is released.

### BRIEF DESCRIPTION OF THE DRAWINGS

The above and other objectives and features of the present invention will become more apparent from the following description of a preferred embodiment thereof with reference to the accompanying drawings, throughout which like parts are designated by like reference numerals, and wherein:
Fig. 1 is an elevational view of a reclining device according to the present invention with one of a pair of brackets removed;
Fig. 2 is a perspective view of a worm and component parts associated therewith, which are mounted in the reclining device of Fig. 1; and
Fig. 3 is a perspective view of the component parts of Fig. 1 with the worm removed.

### DETAILED DESCRIPTION OF THE PREFERRED EMBODIMENT

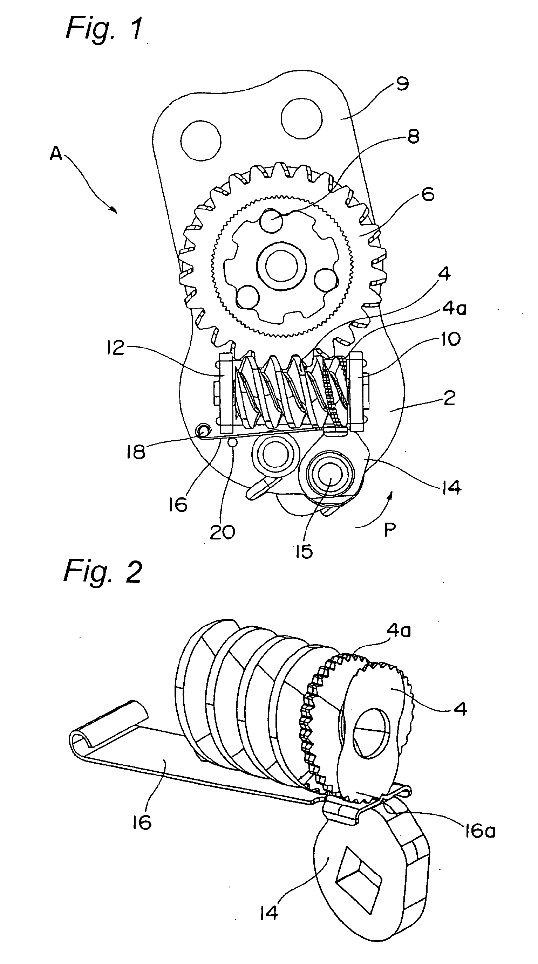

Referring now to the drawings, there is shown in Fig. 1 a reclining device A according to the present invention, which includes a pair of brackets 2 (only one is shown in Fig. 1) spaced a predetermined distance so as to confront each other, a worm 4 rotatably mounted between the pair of brackets 2, and a helical gear 6 held in engagement with the worm 4. The brackets 2 are mounted on a seat cushion (not shown), while the helical gear 6 is mounted on a seat back (not shown) via a plurality of pins 8, a seat back-mounting bracket 9, and the like.

The seat back is always biased frontward by an elastic force of a balance spring (not shown). Both the worm 4 and the helical gear 6 held in engagement with each other have a lead angle greater than a friction angle.

The worm 4 has a front end rotatably supported by a front bearing 10 and a rear end rotatably supported by a rear bearing 12, and both the front and rear bearings 10, 12 are secured to the brackets 2.

The worm 4 has a large number of equally spaced notches 4a in the form of a gear formed on a tooth crest thereof positioned in proximity to the front bearing 10. A lock cam 14 that confronts the notches 4a from below is interposed between the brackets 2 so as to rotate about a mounting shaft 15 secured to the brackets 2. A lock plate 16 made of a plate spring is disposed below the worm 4, and one end of the lock plate 16 is connected to a pin 18 secured to the brackets 2, while the other end of the lock plate 16 is interposed between the large number of notches 4a of the worm 4 and the lock cam 14. A support pin 20 for supporting the lock plate 16 is secured to the brackets 2 at a location adjacent to the pin 18.

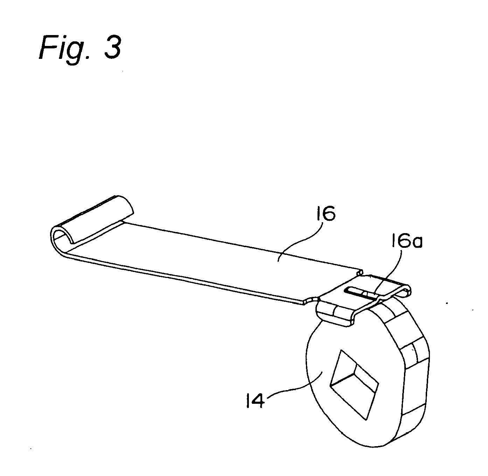

As shown in Figs. 2 and 3, the lock plate 16 has an elongated locking protrusion 16a formed with the other end thereof so as to protrude towards the notches 4a of the worm 4. The lock cam 14 is connected to an operating lever (not shown) that is manually operated to move the locking protrusion 16a of the lock plate 16 up and down to engage or disengage the locking protrusion 16a with or from one of the notches 4a. The lock cam 14 is always biased in a direction of an arrow P by an elastic force of a spring (not shown).

Under the condition in which the operating lever is not operated, the locking protrusion 16a of the lock plate 16 is pressed against the worm 4 by the lock cam 14 to engage with one of the notches 4a, thereby locking both the worm 4 and the helical gear 6. When the lock cam 14 is rotated in a direction counter to the direction of the arrow P by operating the operating lever, the locking protrusion 16a is moved away from the notches 4a by an elastic force of the lock plate 16, thereby releasing the engagement between them.

The reclining device A of the above-described construction operates as follows.

Under the normal condition in which the operating lever connected to the lock cam 14 is not operated, the lock cam 14 is biased in the direction of the arrow P by an elastic force of a biasing means such as a coil spring, and the locking protrusion 16a of the lock plate 16 is held in engagement with one of the notches 4a of the worm 4. Accordingly, rotation of the worm 4 is not allowed, preventing rotation of the helical gear 6 held in engagement with the worm 4. Thus, inclination of the seat back relative to the seat cushion is held at a predetermined angle.

When a change in inclination of the seat back is desired, the operating lever is operated to rotate the lock cam 14 in a direction counter to the direction of the arrow P against the elastic force of the biasing means. As a result, the engagement of the locking protrusion 16a with one of the notches 4a of the worm 4 is released by the elastic force of the lock plate 16, and the worm 4 is allowed to rotate freely.

Because both the worm 4 and the helical gear 6 held in engagement with each other have a lead angle greater than a friction angle, the worm 4 can rotate with rotation of the helical gear 6 about its central shaft. Accordingly, the seat back is inclined frontward by the elastic force of the balance spring, or inclined rearward by applying a rearward load to the seat back against the elastic force of the balance spring. When the hand is released from the operating lever at a desired position, the lock cam 14 is rotated in the direction of the arrow P by the elastic force of the biasing means, and the locking protrusion 16a of the lock plate 16 is again brought into engagement with one of the notches 4a of the worm 4, thereby preventing rotation of the worm 4 to hold the inclination of the seat back at the current angle.

As explained hereinabove, because lock or lock release of the worm 4 and the helical gear 6 held in engagement with each other is carried out via the lock plate 16 interposed between the worm 4 and the lock cam 14, not only can a feeling of operation be improved, but operation of the lock cam 14 can be also smoothly conducted. Accordingly, the reclining device A according to the present invention is effectively utilized in, for example, an automobile seat.

Although the present invention has been fully described by way of an example with reference to the accompanying drawings, it is to be noted here that various changes and modifications will be apparent to those skilled in the art. Therefore, unless such changes and modifications otherwise depart from the spirit and scope of the present invention, they should be construed as being included therein.

## Claims

1. A reclining device (A) for appropriately adjusting an inclination of a seat back with respect to a seat cushion, comprising a worm (4) rotatably mounted on the seat cushion, a helical gear (6) mounted on the seat back and held in engagement with the worm (4), and a lock cam (14) for locking the worm (4) and the helical gear (6) or releasing the lock of the worm (4) and the helical gear (6), wherein both the worm (4) and the helical gear (6) have a lead angle greater than a friction angle,
**characterized in that**
a lock plate (16) having a locking protrusion (16a) formed therewith is interposed between the worm (4) and the lock cam (14), and
the lock cam (14) is operable to press the lock plate (16) against the worm (4) to engage the locking protrusion (16a) with a portion of the worm (4), thereby locking the worm (4) and the helical gear (6).

2. The reclining device according to claim 1, wherein the worm (4) has a large number of notches (4a) formed with a portion thereof, and the locking protrusion (16a) of the lock plate (16) engages with one of the notches (4a) to lock the worm (4) and the helical gear (6).

3. The reclining device according to claim 1 or 2, wherein the lock plate (16) is made of a plate spring, an elastic force of which acts to bias the locking protrusion (16a) in a direction in which the engagement of the locking protrusion (16a) with the worm (4) is released.
